# EUROPÄISCHE PATENTSCHRIFT

(11) **EP 3 807 118 B1**
(45) Veröffentlichungstag und Bekanntmachung des Hinweises auf die Patenterteilung: **18.10.2023**
(21) Anmeldenummer: 19731927.0
(22) Anmeldetag: 13.06.2019
(51) Int. Cl.: B60K 35/00, G02B 27/01, G02B 5/32

(54) **GERÄT ZUM GENERIEREN EINES VIRTUELLEN BILDES MIT STÖRLICHTUNTERDRÜCKUNG**
APPARATUS FOR GENERATING A VIRTUAL IMAGE WITH SUPPRESSION OF PARASITIC LIGHT
APPAREIL POUR GÉNÉRER UNE IMAGE VIRTUELLE À ATTÉNUATION DE LA LUMIÈRE PARASITE

(30) Priorität: 15.06.2018 DE 102018209636; 04.07.2018 DE 102018211026
(43) Veröffentlichungstag der Anmeldung: 21.04.2021
(73) Patentinhaber: Continental Automotive Technologies GmbH, 30165 Hannover (DE)
(72) Erfinder: HABERMEHL, Kai, 65824 Schwalbach a. Ts. (DE); SCHÖPPER, Markus, 65824 Schwalbach a. Ts. (DE)
(74) Vertreter: Continental Corporation
(86) Internationale Anmeldenummer: PCT/EP2019/065593
(87) Internationale Veröffentlichungsnummer: WO 2019/238877

(56) Entgegenhaltungen:
- EP-A1- 3 026 482
- US-A- 5 771 321
- US-A1- 2015 253 469
- Anonymous: "WHITE PAPER DIGILENS' WAVEGUIDE HUD TECHNOLOGY", , 20. Juli 2016 (2016-07-20), XP055615979, Gefunden im Internet: URL:https://www.digilens.com/wp-content/up loads/2017/08/WPSite-DigiLens-Tech.pdf [gefunden am 2019-08-28]

## Beschreibung

Die vorliegende Erfindung betrifft ein Gerät zum Generieren eines virtuellen Bildes und ein Verfahren zum Herstellen eines Lichtwellenleiters für ein solches Gerät.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes. Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Bei der aktuell bekannten Auslegung eines derartigen Geräts, bei dem der Lichtwellenleiter aus Glasplatten besteht, innerhalb derer Beugungsgitter oder Hologramme angeordnet sind, tritt ein Problem im Fall von Sonneneinstrahlung auf. Das eingestrahlte Sonnenlicht wird im Lichtwellenleiter mehrfach gebrochen und in seine Spektralfarben zerlegt. Diese kommen an zahlreichen Stellen wieder aus dem Lichtwellenleiter heraus und werden unter anderem in Richtung des Auges gebrochen. Dies führt zu regenbogenähnlichen oder kontrastmindernden Qualitätsverlusten. Das eigentliche Bild wird dadurch nur noch schwächer wahrgenommen. Vergleichbare Probleme treten bei anderen Störlichtquellen auf.

Aus der Veröffentlichung "White Paper Digilens' Waveguide HUD Technology", XP055615979, ist ein Gerät zum Generieren eines virtuellen Bildes, mit zumindest einer Lichtquelle zum Erzeugen von Licht mit vorgegebener Wellenlänge, einem Anzeigeelement zum Erzeugen eines Bildes, und zumindest zwei in einem Stapel übereinander angeordneten Lichtwellenleitern zum Aufweiten einer Austrittspupille bekannt, in die vom Anzeigeelement kommendes Licht eingekoppelt wird. Die US5771321A offenbart eine Anzeigeeinheit, in welcher Licht über dynamische Elemente an verschiedenen Stellen aus einem Lichtleiter gekoppelt wird. Oberhalb des Lichtleiters ist eine Lochmaske angebracht, um Störlicht zu minimieren.

Ein verbessertes Gerät zum Generieren eines virtuellen Bildes , bei dem der Einfluss von Störlicht reduziert ist, ist erwünscht.

Die wird durch ein Gerät mit den Merkmalen des Anspruchs 1 und durch ein Verfahren mit den Merkmalen des Anspruchs 7 erreicht. Bevorzugte Ausgestaltungen der Erfindung sind Gegenstand der abhängigen Ansprüche.

Gemäß einem ersten Aspekt der Erfindung weist ein Gerät zum Generieren eines virtuellen Bildes auf:
- zumindest eine Lichtquelle zum Erzeugen von Licht mit vorgegebener Wellenlänge;
- ein Anzeigeelement zum Erzeugen eines Bildes;
- einen Lichtwellenleiter zum Aufweiten einer Austrittspupille, in den vom Anzeigeelement kommendes Licht eingekoppelt wird; und
- eine oberhalb einer oberen Begrenzungsfläche des Lichtwellenleiters angeordnete Lochmaske, die Löcher und intransparente Bereiche aufweist.

Erfindungsgemäß wird vorgeschlagen, den Lichtwellenleiter an seiner der Störlichtquelle zugewandten Seite mit einer Lochmaske zu versehen. Hierdurch wird das Störlicht davon abgehalten, in den Lichtwellenleiter einzutreten. Aufgrund der physikalischen Eigenschaften des Lichtwellenleiters wird das in den Lichtwellenleiter eingekoppelte Licht an dessen Grenzflächen totalreflektiert und somit innerhalb des Lichtwellenleiters geleitet. Die gewünschten Lichtbündel treten an prognostizierbaren Orten aus dem Lichtwellenleiter heraus in Richtung des Auges des Nutzers. Eine hochpräzise Fertigung ermöglicht es, diese Positionen sehr genau auf kleine Flächen einzuschränken. Je kleiner die Fläche der Löcher in Bezug auf die gesamte Fläche der Lochmaske ist, desto weniger Störlicht tritt in den Lichtwellenleiter ein. Die Lochmaske hindert zudem den größten Teil des dennoch in den Lichtwellenleiter gelangten Störlichts, wieder aus diesem heraus und in das Fahrerauge zu gelangen.

Durch die erfindungsgemäße Lösung wird eine erhebliche Verbesserung der Bildqualität und des Kontrasts bei Anwesenheit von Störlichtquellen erzielt. Durch die deutlich reduzierte Einkopplung von Sonnenlicht in das optische System verringert sich auch eine aus der Sonneneinstrahlung resultierende Erwärmung des Systems, wodurch sich die Bildqualität ebenfalls verbessert.

Die Lochmaske weist Löcher und intransparente Bereiche auf. Der Abstand der Löcher hängt im Wesentlichen von der Dicke des Lichtwellenleiters und dem Winkel des refraktierten Lichtbündels ab. Der Zwischenraum ist für das virtuelle Bild optisch nicht relevant. Außerhalb der Bereiche der Löcher wird daher eine intransparente Schicht aufgebracht, beispielsweise eine absorbierende Schicht. Dies kann z.B. in Form eines schwarzen Aufdrucks oder einer schwarzen Beschichtung erfolgen.

Gemäß einem Aspekt der Erfindung ist zwischen der oberen Begrenzungsfläche und der Lochmaske eine reflektierende Schicht angeordnet. Die reflektierende Schicht sorgt dafür, dass vom Lichtwellenleiter her auf die intransparenten Bereiche gelangendes Licht wieder in den Lichtwellenleiter reflektiert wird. Auf diese Weise ist sichergestellt, dass es trotz der aufgebrachten intransparenten Schicht zu Totalreflexionen an den Grenzflächen des Lichtwellenleiters kommt.

Gemäß einem Aspekt der Erfindung weist die reflektierende Schicht Löcher auf, deren Positionen mit den Positionen von Löchern der Lochmaske übereinstimmen. Durch die Löcher wird die Auskopplung von Licht aus dem Lichtwellenleiter an den gewünschten Positionen verbessert.

Gemäß einem Aspekt der Erfindung ist zwischen der oberen Begrenzungsfläche und der Lochmaske ein Luftspalt oder eine Schicht aus einem Material angeordnet, dessen Brechungsindex im Bereich des Brechungsindex von Luft liegt. Auch auf diese Weise kann sichergestellt werden, dass es trotz der aufgebrachten intransparenten Schicht zu Totalreflexionen an den Grenzflächen des Lichtwellenleiters kommt.

Das Gerät weist zumindest zwei in einem Stapel übereinander angeordnete Lichtwellenleiter auf, wobei auf jedem der Lichtwellenleiter eine Lochmaske angeordnet ist. Durch die Verwendung von zwei oder mehr Lichtwellenleitern kann eine Mehrfarben- oder Vollfarben-Darstellung des virtuellen Bildes realisiert werden. Dabei wird jeder der Lichtwellenleiter für eine der verwendeten Farben genutzt und kann für diese optimiert sein. Dadurch, dass auf jedem der Lichtwellenleiter eine Lochmaske angeordnet ist, wird neben der Einkopplung von externem Störlicht auch die Ausbreitung internen Streulichts im optischen System reduziert.

Die Löcher einer Lochmaske eines weiter oben im Stapel angeordneten Lichtwellenleiters haben einen größeren Durchmesser als die Löcher einer Lochmaske eines weiter unten im Stapel angeordneten Lichtwellenleiters. Dies ermöglicht es, dass die durch die Löcher aus einem weiter unten im Stapel angeordneten Lichtwellenleiter gelangenden Lichtbündel auch nach Passieren der darüber liegenden Löcher diese trotz Aufweitung möglichst komplett passieren. Zugleich gelangt dennoch nur möglichst wenig Störlicht in die jeweiligen Lichtwellenleiter.

Gemäß einem Aspekt der Erfindung ist unterhalb einer unteren Begrenzungsfläche zumindest eines der Lichtwellenleiter eine weitere Lochmaske angeordnet. Dies reduziert den Störlichtanteil noch weiter.

Vorzugsweise wird ein erfindungsgemäßes Gerät in einem Fahrzeug, insbesondere einem Kraftfahrzeug, eingesetzt. Dabei wird die Lochmaske vorzugsweise farbtechnisch an das Design des Armaturenbrettes des Fahrzeugs angepasst. Dies verhindert Irritationen des Fahrers oder anderer Verkehrsteilnehmer, die durch eine uneinheitlich erscheinende Oberfläche des Armaturenbretts hervorgerufen werden können, und erhöht somit die Verkehrssicherheit.

Gemäß einem weiteren Aspekt der Erfindung umfasst ein Verfahren zum Herstellen eines Lichtwellenleiters für ein Gerät zum Generieren eines virtuellen Bildes die Schritte:
- Aufbringen eines mittels einer für den entsprechenden Lichtwellenleiter vorgesehenen Wellenlänge belichtbaren Fotolacks auf den Lichtwellenleiter oder auf eine auf den Lichtwellenleiter aufgebrachte reflektierende Schicht;
- Einbringen des Lichtwellenleiters in den optischen Aufbau des Geräts;
- Belichten des aufgebrachten Fotolacks mit einer Lichtquelle des Geräts für die vorgesehene Wellenlänge;
- Entfernen der unbelichteten Teile des Fotolacks;
- Optional Aufbringen einer reflektierenden Schicht außerhalb der belichteten Bereiche des Fotolacks;
- Aufbringen intransparenter Bereiche außerhalb der belichteten Bereiche des Fotolacks; und
- Entfernen der belichteten Teile des Fotolacks.

Die Beleuchtung des aufgebrachten Fotolacks mit der mit der geräteeigenen Lichtquelle für die vorgesehene Wellenlänge hat den Vorteil, dass die Belichtung genau dort erfolgt, wo sich später die Löcher befinden sollen, d.h. dort, wo das Licht auch im Betrieb den Lichtwellenleiter verlässt.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch einen Lichtwellenleiter eines erfindungsgemäßen Geräts zum Generieren eines virtuellen Bildes;
- Fig. 6: zeigt schematisch einen Schichtaufbau des Lichtwellenleiters aus Fig. 5 in vergrößerter Darstellung;
- Fig. 7: zeigt schematisch drei übereinander angeordnete Lichtwellenleiter für unterschiedliche Wellenlängen; und
- Fig. 8: zeigt schematisch ein Verfahren zur Herstellung eines Lichtwellenleiters für ein erfindungsgemäßes Gerät.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

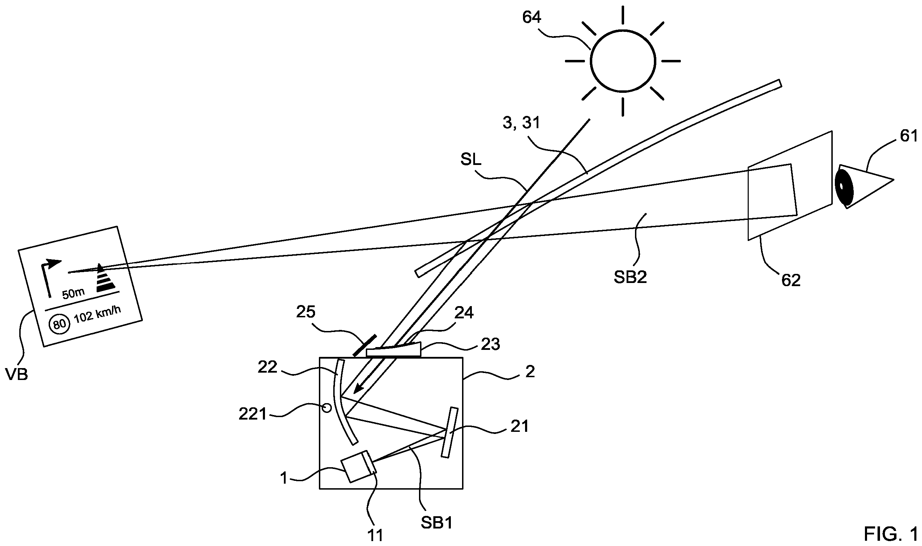

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodass das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

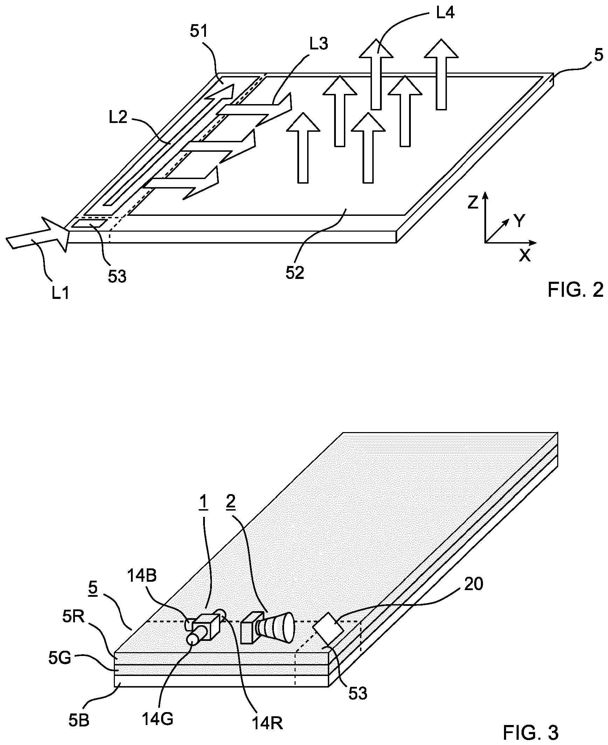

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2 . In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

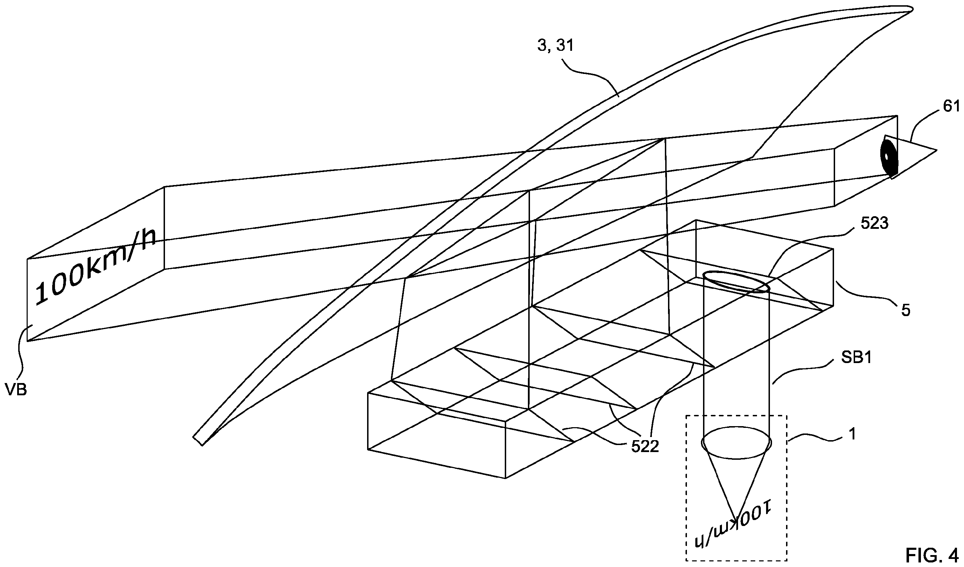

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

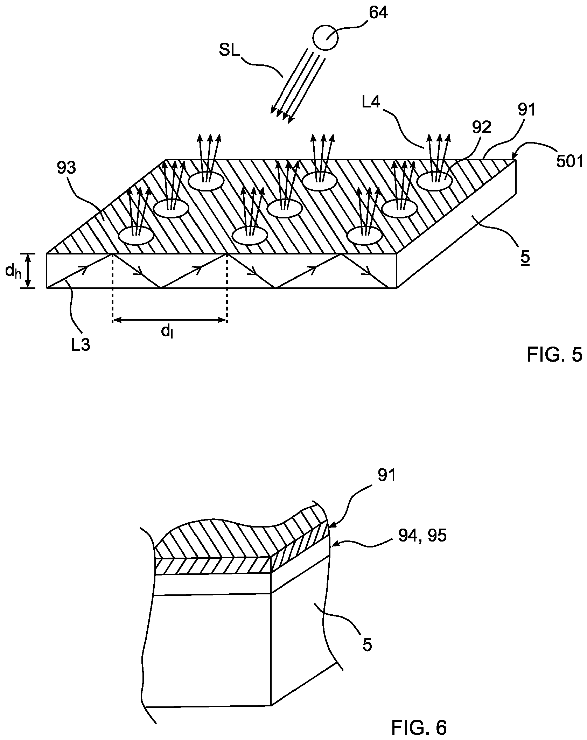

Fig. 5 zeigt den Lichtwellenleiter 5 eines erfindungsgemäßen Geräts in schematischer Darstellung. Man erkennt die an der oberen Begrenzungsfläche 501, der Lichtaustrittsseite des Lichtwellenleiters 5, angeordnete Lochmaske 91. Diese weist transparente Löcher 92 auf sowie um diese Löcher 92 herum intransparente, vorzugsweise absorbierende Bereiche 93. Die Dicke des Lichtwellenleiters 5 ist mit dₕ bezeichnet. Die Abstände der Löcher 92 sind mit dₗ bezeichnet. Mit L3 ist das im Lichtwellenleiter 5 verlaufende Licht bezeichnet, mit L4 das durch die Löcher 92 aus dem Lichtwellenleiter 5 austretende Licht. Das von der als Störlichtquelle 64 bezeichneten Sonne kommende Sonnenlicht SL trifft auf die intransparenten Bereiche 93 der Lochmaske 91 und wird von diesen daran gehindert, in den Lichtwellenleiter 5 einzutreten. Der Eintritt von Sonnenlicht SL kann nur durch die Löcher 92 erfolgen. Da diese nur einen geringen Flächenanteil der Lochmaske 91 ausmachen, tritt nur ein geringer Anteil des Sonnenlichts SL in den Lichtwellenleiter 5 ein. Dieser geringe Anteil wird innerhalb des Lichtwellenleiters 5 reflektiert oder verlässt diesen an einer seiner anderen Begrenzungsflächen. Nur ein geringer Anteil des durch die Löcher 92 in den Lichtwellenleiter 5 gelangten Sonnenlichts SL gelangt wieder von innen an eines der Löcher 92 und verlässt den Lichtwellenleiter 5 dort. Somit ist das in Richtung Auge 61 gelangende Störlicht stark reduziert.

In Fig. 6 ist eine Ecke des Lichtwellenleiters 5 vergrößert dargestellt. Man erkennt eine zwischen Lochmaske 91 und Lichtwellenleiter 5 befindliche reflektierende Schicht 94, die an den Stellen der Löcher 92 ebenfalls Löcher aufweist. Die reflektierende Schicht 94 sorgt dafür, dass vom Lichtwellenleiter 5 her auf die intransparenten Bereiche 93 gelangendes Licht wieder in den Lichtwellenleiter 5 reflektiert wird. Alternativ kann statt einer reflektierenden Schicht ein Luftspalt 95 vorgesehen sein, an dem Entsprechendes aufgrund von Totalreflexion erfolgt. Eine weitere Alternative sieht vor, anstelle des Luftspalts 95 eine Schicht aus einem Material aufzubringen, dessen Brechungsindex möglichst nahe an dem von Luft liegt. Dies gewährleistet sowohl die Totalreflexion an der Begrenzungsfläche als auch eine stabile Anordnung der Lochmaske 91 auf dem Lichtwellenleiter 5.

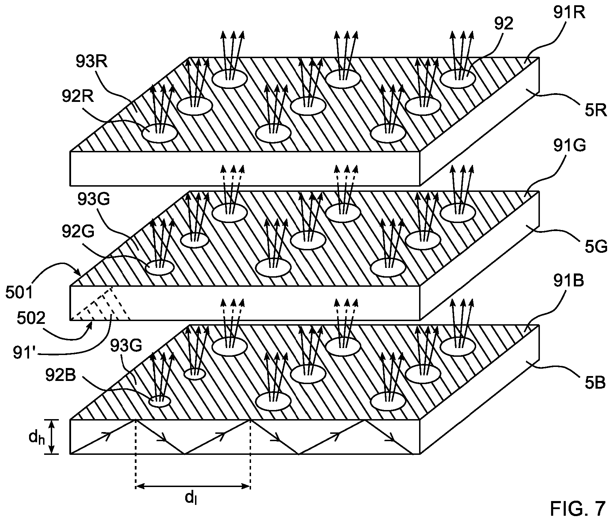

Fig. 7 zeigt eine Variante eines erfindungsgemäßen Geräts. Hier sind drei Lichtwellenleiter 5R, 5G, 5B für drei unterschiedliche Wellenlängen in einem Stapel übereinander angeordnet. Jeder der Lichtwellenleiter 5R, 5G, 5B weist auf seiner Lichtaustrittsseite eine Lochmaske 91R, 91G, 91B mit den entsprechenden Löchern 92R, 92G, 92B und intransparenten Bereichen 93, 93R, 93G, 93B auf. Die Löcher 92R, 92G, 92B der verschiedenen Lochmasken 91R, 91G, 91B weisen eine dem jeweiligen Lichtwellenleiter 5R, 5G, 5B angepasste Größe auf. Dies ist im linken Bereich der Abbildung beispielhaft an jeweils zwei Löchern 92R, 92G, 92B angedeutet. Man erkennt dort, dass die Löcher 92B der Lochmaske 91B des untersten Lichtwellenleiters 5B wesentlich kleiner sind, als die Löcher 92G der Lochmaske 91G des darüber angeordneten Lichtwellenleiters 5G, und diese wiederum kleiner sind, als die Löcher 92R der Lochmaske 91R des oberen Lichtwellenleiters 5R. Dies ermöglicht es, dass die durch die Löcher 92B aus dem Lichtwellenleiter 5B gelangenden Lichtbündel auch nach Passieren der darüber liegenden Löcher 92G, 92R diese trotz Aufweitung möglichst komplett passieren. Zugleich gelangt dennoch nur möglichst wenig Störlicht SL in die jeweiligen Lichtwellenleiter 5R, 5G, 5B. Eine weitere Variante ist am mittleren Lichtwellenleiter 5G angedeutet. Man erkennt dort außer der Lochmaske 91G an der oberen Begrenzungsfläche 501 eine weitere Lochmaske 91' an der unteren Begrenzungsfläche 502. Dies reduziert den Störlichtanteil noch weiter.

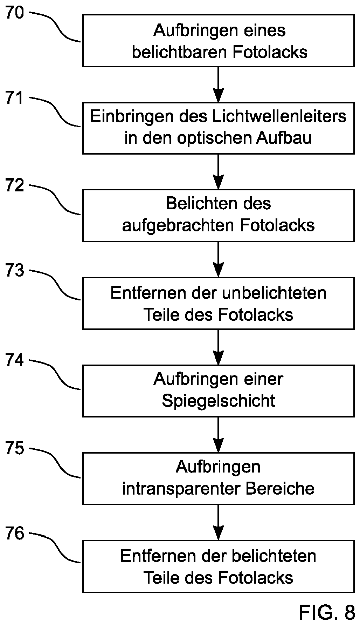

Fig. 8 zeigt schematisch ein Verfahren zur Herstellung eines Lichtwellenleiters für ein erfindungsgemäßes Gerät. Eine hochpräzise Herstellung der Löcher erfolgt vorzugsweise, indem zunächst auf die Begrenzungsfläche des Lichtwellenleiters ein mittels der für den entsprechenden Lichtwellenleiter vorgesehenen Wellenlänge belichtbarer Fotolack aufgebracht wird 70. Dabei kann zuvor auch eine reflektierende Schicht auf den Lichtwellenleiter aufgebracht werden. In diesem Fall wird der Fotolack auf die reflektierende Schicht aufgebracht 70. Der mit Fotolack beschichtete Lichtwellenleiter wird dann in den optischen Aufbau des Geräts eingebracht 71 und nachfolgend mit der Lichtquelle des Geräts für die vorgesehene Wellenlänge belichtet 72. Dies hat den Vorteil, dass die Belichtung genau dort erfolgt, wo sich später die Löcher befinden sollen, d.h. dort, wo das Licht auch im Betrieb den Lichtwellenleiter verlässt. Im Anschluss an das Belichten werden die unbelichteten Teile des Fotolacks entfernt 73. Es verbleiben somit lediglich die belichteten Teile des Fotolacks auf dem Lichtwellenleiter. Sofern zu Beginn des Verfahrens keine reflektierende Schicht aufgebracht wurde, kann nun außerhalb der belichteten Bereiche des Fotolacks optional eine reflektierende Schicht aufgebracht werden 74. In diesem Fall hat die reflektierende Schicht Löcher, deren Positionen nach der Fertigstellung mit den Positionen von Löchern der Lochmaske übereinstimmen. Anschließend werden die intransparenten Bereiche außerhalb der belichteten Bereiche des Fotolacks aufgebracht 75 und schließlich die belichteten Teile des Fotolacks entfernt 76.

Ein alternatives Herstellungsverfahren sieht einen präzise ausgerichteten Druckvorgang vor, um die Lochmaske und gegebenenfalls die reflektierende Schicht aufzubringen.

## Patentansprüche

1. Gerät zum Generieren eines virtuellen Bildes (VB), mit:
- zumindest einer Lichtquelle (14, 14R, 14G, 14B) zum Erzeugen von Licht mit vorgegebener Wellenlänge;
- einem Anzeigeelement (11) zum Erzeugen eines Bildes;
- zumindest zwei in einem Stapel übereinander angeordneten Lichtwellenleitern (5, 5R, 5G, 5B) zum Aufweiten einer Austrittspupille, in die jeweils vom Anzeigeelement (11) kommendes Licht (L1) eingekoppelt wird; und
- oberhalb einer oberen Begrenzungsfläche (501) jedes Lichtwellenleiters (5, 5R, 5G, 5B) angeordneten Lochmaske (91, 91R, 91G, 91B), die Löcher (92, 92R, 92G, 92B) und intransparente Bereiche (93, 93R, 93G, 93B) aufweist, wobei die Löcher (92R, 92G, 92B) einer Lochmaske (91R, 91G, 91B) eines weiter oben im Stapel angeordneten Lichtwellenleiters (5R, 5G, 5B) einen größeren Durchmesser haben als die Löcher (92R, 92G, 92B) einer Lochmaske (91R, 91G, 91B) eines weiter unten im Stapel angeordneten Lichtwellenleiters (5R, 5G, 5B) .

2. Gerät gemäß Anspruch 1, wobei zwischen der oberen Begrenzungsfläche (501) und der Lochmaske (91, 91R, 91G, 91B) eine reflektierende Schicht (94) angeordnet ist.

3. Gerät gemäß Anspruch 2, wobei die reflektierende Schicht (94) Löcher aufweist, deren Positionen mit den Positionen von Löchern (92, 92R, 92G, 92B) der Lochmaske (91, 91R, 91G, 91B) übereinstimmen.

4. Gerät gemäß Anspruch 1, wobei zwischen der oberen Begrenzungsfläche (501) und der Lochmaske (91, 91R, 91G, 91B) ein Luftspalt (95) oder eine Schicht aus einem Material angeordnet ist, dessen Brechungsindex im Bereich des Brechungsindex von Luft liegt.

5. Gerät gemäß einem der vorhergehenden Ansprüche, wobei unterhalb einer unteren Begrenzungsfläche (502) zumindest eines der Lichtwellenleiter (5, 5R, 5G, 5B) eine weitere Lochmaske (91') angeordnet ist.

6. Fahrzeug mit einem Gerät gemäß einem der Ansprüche 1 bis 5 zum Generieren eines virtuellen Bildes (VB) für einen Fahrer des Fahrzeugs.

7. Verfahren zum Herstellen eines Lichtwellenleiters (5, 5R, 5G, 5B) für ein Gerät gemäß einem der Ansprüche 1 bis 5, mit den Schritten:
- Aufbringen (70) eines mittels einer für den entsprechenden Lichtwellenleiter (5, 5R, 5G, 5B) vorgesehenen Wellenlänge belichtbaren Fotolacks auf den Lichtwellenleiter (5, 5R, 5G, 5B) oder auf eine auf den Lichtwellenleiter (5, 5R, 5G, 5B) aufgebrachte reflektierende Schicht (94);
- Einbringen (71) des Lichtwellenleiters (5, 5R, 5G, 5B) in den optischen Aufbau des Geräts;
- Belichten (72) des aufgebrachten Fotolacks mit der Lichtquelle (14, 14R, 14G, 14B) des Geräts für die vorgesehene Wellenlänge;
- Entfernen (73) der unbelichteten Teile des Fotolacks;
- Optional Aufbringen (74) einer reflektierenden Schicht außerhalb der belichteten Bereiche des Fotolacks;
- Aufbringen (75) intransparenter Bereiche (93, 93R, 93G, 93B) außerhalb der belichteten Bereiche des Fotolacks; und
- Entfernen (76) der belichteten Teile des Fotolacks.

## Claims

1. Device for generating a virtual image (VB), having:
- at least one light source (14, 14R, 14G, 14B) for producing light at a specified wavelength;
- a display element (11) for producing an image;
- at least two optical waveguides (5, 5R, 5G, 5B) arranged above one another in a stack and serving to expand an exit pupil, input coupled into which is light (L1) coming from the display element (11) in each case; and
- a perforated mask (91, 91R, 91G, 91B) arranged above an upper delimiting surface (501) of each optical waveguide (5, 5R, 5G, 5B) and having holes (92, 92R, 92G, 92B) and non-transparent regions (93, 93R, 93G, 93B), wherein the holes (92R, 92G, 92B) of a perforated mask (91R, 91G, 91B) of an optical waveguide (5R, 5G, 5B) arranged further up in the stack have a greater diameter than the holes (92R, 92G, 92B) of a perforated mask (91R, 91G, 91B) of an optical waveguide (5R, 5G, 5B) arranged further down in the stack.

2. Device according to Claim 1, wherein a reflective layer (94) is arranged between the upper delimiting surface (501) and the perforated mask (91, 91R, 91G, 91B).

3. Device according to Claim 2, wherein the reflective layer (94) has holes whose positions correspond to the positions of holes (92, 92R, 92G, 92B) of the perforated mask (91, 91R, 91G, 91B).

4. Device according to Claim 1, wherein an air gap (95) or a layer made of a material whose refractive index is of the order of the refractive index of air is arranged between the upper delimiting surface (501) and the perforated mask (91, 91R, 91G, 91B).

5. Device according to any of the preceding claims, wherein a further perforated mask (91') is arranged below a lower delimiting surface (502) of at least one of the optical waveguides (5, 5R, 5G, 5B).

6. Vehicle having a device according to any of Claims 1 to 5 for generating a virtual image (VB) for a driver of the vehicle.

7. Method for manufacturing an optical waveguide (5, 5R, 5G, 5B) for a device according to any of Claims 1 to 5, including the steps:
- applying (70) a photoresist, which is exposable by means of a wavelength provided for the corresponding optical waveguide (5, 5R, 5G, 5B), to the optical waveguide (5, 5R, 5G, 5B) or to a reflective layer (94) which has been applied to the optical waveguide (5, 5R, 5G, 5B);
- introducing (71) the optical waveguide (5, 5R, 5G, 5B) into the optical structure of the device;
- exposing (72) the applied photoresist to the light source (14, 14R, 14G, 14B) of the device for the provided wavelength;
- removing (73) the unexposed parts of the photoresist;
- optionally applying (74) a reflective layer outside of the exposed regions of the photoresist;
- applying (75) non-transparent regions (93, 93R, 93G, 93B) outside of the exposed regions of the photoresist; and
- removing (76) the exposed parts of the photoresist.

## Revendications

1. Unité de génération d'une image virtuelle (VB), ladite unité comprenant :
- au moins une source de lumière (14, 14R, 14G, 14B) destinée à générer de la lumière d'une longueur d'onde spécifiée ;
- un élément d'affichage (11) destiné à générer une image ;
- au moins deux guides d'onde lumineuse (5, 5R, 5G, 5B) disposés l'un au-dessus de l'autre dans une pile et destinés à élargir une pupille de sortie dans laquelle la lumière (L1) provenant de l'élément d'affichage (11) est injectée par couplage ; et
- un masque perforé (91, 91R, 91G, 91B) qui est disposé au-dessus d'une surface limite supérieure (501) de chaque guide d'onde lumineuse (5, 5R, 5G, 5B) et qui comporte des trous (92, 92R, 92G, 92B) et des zones non transparentes (93, 93R, 93G, 93B), les trous (92R, 92G, 92B) d'un masque perforé (91R, 91G, 91B) d'un guide d'onde lumineuse (5R, 5G, 5B) disposé plus haut dans la pile ayant un diamètre supérieur à celui des trous (92R, 92G, 92B) d'un masque perforé (91R, 91G, 91B) d'un guide d'onde lumineuse (5R, 5G, 5B) disposé plus bas dans la pile.

2. Unité selon la revendication 1, une couche réfléchissante (94) étant disposée entre la surface limite supérieure (501) et le masque perforé (91, 91R, 91G, 91B).

3. Unité selon la revendication 2, la couche réfléchissante (94) comportant des trous dont les positions coïncident avec les positions des trous (92, 92R, 92G, 92B) du masque perforé (91, 91R, 91G, 91B).

4. Unité selon la revendication 1, un espace d'air (95) ou une couche d'un matériau dont l'indice de réfraction est dans la gamme de l'indice de réfraction de l'air étant disposé(e) entre la surface limite supérieure (501) et le masque perforé (91, 91R, 91G, 91B).

5. Unité selon l'une des revendications précédentes, un autre masque perforé (91') étant disposé au-dessous d'une surface limite inférieure (502) d'au moins un des guides d'onde lumineuse (5, 5R, 5G, 5B).

6. Véhicule comprenant une unité selon l'une des revendications 1 à 5 destinée à générer une image virtuelle (VB) à destination d'un conducteur du véhicule.

7. Procédé de réalisation d'un guide d'onde lumineuse (5, 5R, 5G, 5B) destiné à une unité selon l'une des revendications 1 à 5, ledit procédé comprenant les étapes suivantes :
- appliquer (70) une résine photosensible, qui peut être exposée à une longueur d'onde prévue pour le guide d'onde lumineuse correspondant (5, 5R, 5G, 5B), sur le guide d'onde lumineuse (5, 5R, 5G, 5B) ou sur une couche réfléchissante (94) appliquée sur le guide d'onde lumineuse (5, 5R, 5G, 5B) ;
- introduire (71) le guide d'onde lumineuse (5, 5R, 5G, 5B) dans la structure optique de l'unité ;
- exposer (72) la résine photosensible appliquée à la source de lumière (14, 14R, 14G, 14B) de l'unité pour la longueur d'onde prévue ;
- retirer (73) les parties non exposées de la résine photosensible ;
- éventuellement appliquer (74) une couche réfléchissante à l'extérieur des zones exposées de la résine photosensible ;
- appliquer (75) des zones non transparentes (93, 93R, 93G, 93B) à l'extérieur des zones exposées de la résine photosensible ; et
- retirer (76) les parties exposées de la résine photosensible.
